# EUROPÄISCHE PATENTSCHRIFT

(11) **EP 3 519 729 B1**
(45) Veröffentlichungstag und Bekanntmachung des Hinweises auf die Patenterteilung: **14.12.2022**
(21) Anmeldenummer: 17761508.5
(22) Anmeldetag: 05.09.2017
(51) Int. Cl.: F21V 8/00

(54) **OPTISCHES SYSTEM FÜR EINE LEUCHTE, SOWIE LEUCHTE**
OPTICAL SYSTEM FOR A LAMP, AND LAMP
SYSTÈME OPTIQUE POUR APPAREIL D'ÉCLAIRAGE, AINSI QU'APPAREIL D'ÉCLAIRAGE

(30) Priorität: 28.09.2016 DE 102016218712
(43) Veröffentlichungstag der Anmeldung: 07.08.2019
(73) Patentinhaber: Zumtobel Lighting GmbH, 6850 Dornbirn (AT)
(72) Erfinder: KELLER, Katharina, 88161 Lindau (DE)
(74) Vertreter: Thun, Clemens
(86) Internationale Anmeldenummer: PCT/EP2017/072158
(87) Internationale Veröffentlichungsnummer: WO 2018/059879

(56) Entgegenhaltungen:
- DE-A1-102014 200 369
- US-A1- 2006 250 819
- US-A1- 2008 285 310
- US-A1- 2013 194 809
- US-B1- 7 001 060

## Beschreibung

Die Erfindung betrifft ein optisches System für eine Leuchte, das ein Lichtleiterelement und ein Lichtdurchtrittselement aufweist; außerdem betrifft die Erfindung eine Leuchte mit einem solchen optischen System.

Aus dem Stand der Technik ist eine Leuchte in Form eines Downlights bekannt, das als Lichtquelle mehrere LEDs (LED: Licht emittierende Diode) aufweist. Mit "Downlight" sei hier eine Deckenleuchte bezeichnet, wobei es sich um eine Deckeneinbauleuchte oder eine Deckenanbauleuchte handeln kann. Wenn ein derartiges Downlight mit einer geringen Bauhöhe gestaltet werden soll, würde es sich auf den ersten Blick anbieten, die LEDs in einem, nach unten offenen, topfartigen Downlight-Gehäuse parallel zur entsprechenden Deckenebene beispielsweise matrixartig anzuordnen und für jede LED ein entsprechendes optisches Element vorzusehen. Das Gehäuse wird dann mit einer lichtdurchlässigen Scheibe abgedeckt, so dass das Licht der LEDs von dem Downlight über die Scheibe nach unten abgegeben wird. Allerdings führt eine solche Gestaltung bei entsprechend niedriger Bauhöhe des Downlights in der Regel dazu, dass die Scheibe von der Raumseite her betrachtet ungleichmäßig hell erscheint bzw. eine Art Schattenbildung zu erkennen ist. Im Allgemeinen ist es jedoch erwünscht, dass ein Licht abgebendes Downlight eine gleichmäßig hell erscheinende Lichtfläche erzeugt.

Weiterhin ist aus dem Stand der Technik ein plattenförmiges Lichtleiterelement, also eine Lichtleiterplatte bekannt, in die über eine seitliche Randfläche das Licht von LEDs eingestrahlt bzw. "eingekoppelt" wird. Dabei kann beispielsweise durch geeignete Strukturierung der Plattenoberfläche erzielt werden, dass das Licht die Lichtleiterplatte über eine ihrer beiden großen Hauptoberflächen wieder verlässt, also sozusagen wieder "ausgekoppelt" wird. Im Allgemeinen ergibt sich jedoch auch hier das Problem, dass die Licht abgebende Oberfläche der Lichtleiterplatte in der Regel mehr oder weniger ungleichmäßig hell erscheint. Zudem muss hier für die Anordnung der LEDs am Randbereich der Lichtleiterplatte entsprechender Raum zur Verfügung stehen.

Die US 2013/0194809 A1 zeigt ein zur Lichtabgabe vorgesehenes optisches System, bei dem ein erstes Lichtleitelement dazu genutzt wird, das Licht einer zentral positionierten Lichtquelle auf einen ringartigen Flächenbereich zu verteilen, wobei ferner ein scheibenförmiges Lichtdurchtrittselement vorgesehen ist, über welches letztendlich das Licht abgestrahlt wird. Weitere optische Systeme, bei denen einerseits in Lichtleitelement sowie andererseits ein mit dem Lichtleitelement gekoppeltes Lichtdurchtrittselement vorgesehen sind, sind aus der US 2006/250819 A1, der US 2008/285310 A1, der DE 10 2014 200369 A1 sowie der US 7 001 060 B1 bekannt. Der Erfindung liegt die Aufgabe zugrunde, ein besonders geeignetes optisches System für eine Leuchte anzugeben. Außerdem soll eine entsprechende Leuchte, insbesondere in Form eines Downlights angegeben werden. Dabei soll sich das optische System insbesondere dazu eignen, bei geringer Bauhöhe der Leuchte eine Lichtfläche mit besonders geringer Inhomogenität zu erzeugen.

Diese Aufgabe wird gemäß der Erfindung mit den in den unabhängigen Ansprüchen genannten Gegenständen gelöst. Besondere Ausführungsarten der Erfindung sind in den abhängigen Ansprüchen angegeben.

Gemäß der Erfindung ist ein optisches System für eine Leuchte, insbesondere für ein Downlight, vorgesehen, das ein Lichtleiterelement mit einer Lichteintrittsfläche zum Eintritt eines Lichts und mit einem Lichtaustrittsbereich zum Austritt des Lichts aufweist. Weiterhin weist das optische System ein Lichtdurchtrittselement auf. Weiterhin ist die Gestaltung derart, dass das Licht nach dem Austritt aus dem Lichtleiterelement das Lichtdurchtrittselement durchsetzt.

Durch diese Ausgestaltung lässt sich insbesondere eine besonders homogene Verteilung des Lichts in dem Lichtdurchtrittselement erzielen. Auf diese Weise lässt sich in der Folge eine besonders gleichmäßige Lichtabgabe über das Lichtdurchtrittselement bewirken.

Vorzugsweise sind das Lichtleiterelement und das Lichtdurchtrittselement fest miteinander verbunden, beispielsweise miteinander verklebt oder miteinander verschmolzen. Dies ist vorteilhaft mit Bezug auf einen wirkungsvollen Übertritt des Lichts aus dem Lichtleiterelement in das Lichtdurchtrittselement.

Erfindungsgemäß ist zum Austritt des Lichts aus dem Lichtaustrittsbereich des Lichtleiterelements an einem der beiden Bauteile Lichtdurchtrittselement oder Lichtleiterelement ein strukturierter Oberflächenbereich gebildet. So lässt sich eine besonders geeignete, homogene Lichtabgabe über das Lichtdurchtrittselement bewirken. Bevorzugt weist dabei das entsprechend andere der beiden genannten Bauteile einen planen Oberflächenbereich zur Kontaktierung mit dem strukturierten Oberflächenbereich auf. Dies ist insbesondere vorteilhaft mit Bezug auf eine einfache Herstellungsmöglichkeit des Bauteils mit dem planen Oberflächenbereich. Erfindungsgemäß sind dabei das Lichtleiterelement und das Lichtdurchtrittselement über eine, durch den strukturierten Oberflächenbereich gebildete Kontaktfläche miteinander verbunden.

Erfindungsgemäß weist dabei der strukturierte Oberflächenbereich Strukturelemente auf, die in einem Querschnitt betrachtet in erster Näherung eine Trapezform, insbesondere eine symmetrische oder eine asymmetrische Trapezform aufweisen. Hierdurch lässt sich eine besonders geeignete Lichtlenkung erzielen.

Dabei weisen besonders die Strukturelemente erfindungsgemäß in dem Querschnitt betrachtet einen seitlichen Flankenbereich mit einem Wendepunkt auf, so dass ein erster Flankenteilbereich gebildet ist, der eine konkave Krümmung aufweist und ein zweiter Flankenteilbereich, der eine konvexe Krümmung aufweist, wobei vorzugsweise der Verlauf des Flankenbereichs durch eine Spline-Funktion beschrieben ist.

Vorzugsweise sind die Strukturelemente derart gestaltet sind, dass sie mit Bezug auf die Lichteintrittsfläche eine konzentrische Anordnung bilden. Dies ist vorteilhaft mit Bezug auf die Erzielung einer besonders hochgradigen Homogenität des über das Lichtdurchtrittselement abgegebenen Lichts.

Vorzugsweise erstreckt sich der Lichtaustrittsbereich des Lichtleiterelements in einer Ebene, wobei das Lichtleiterelement außerdem einen, an den Lichtaustrittsbereich angrenzenden, aus der Ebene heraus gekrümmten Bereich aufweist, an dem die Lichteintrittsfläche gebildet ist. Auf diese Weise lässt sich insbesondere erzielen, dass sich das Licht auf seinem Weg innerhalb des gekrümmten Bereichs zwischen der Lichteintrittsfläche und dem Lichtaustrittsbereich so verteilt, dass es im Weiteren den Lichtaustrittsbereich besonders gleichmäßig bzw. homogen erfüllt. Zudem eignet sich ein an den gekrümmten Bereich und das Lichtdurchtrittselement angrenzender Raumbereich besonders vorteilhaft für die Anordnung eines Sensors oder eines Funksenders oder -empfängers der Leuchte.

Vorzugsweise ist das Lichtdurchtrittselement plattenartig gestaltet, wobei es sich parallel zu der Ebene erstreckend angeordnet ist. So lässt sich das optische System insgesamt mit einer besonders geringen Erstreckung normal zu der Ebene, also mit einer besonders geringen Bauhöhe gestalten.

Vorzugsweise weist zumindest eines der Strukturelemente in einem Schnitt parallel zu der Ebene betrachtet eine beispielsweise kreisförmige oder kreisabschnittförmige Haupterstreckung auf, sowie eine, der Haupterstreckung überlagerte Wellenform. Hierdurch lässt sich die zu erzielende Homogenität weiterhin steigern.

Vorzugsweise ist der Lichtaustrittsbereich sich in der Ebene ringartig geschlossen erstreckend gestaltet, so dass hierdurch ein, in der Ebene verlaufender innerer Randbereich des Lichtaustrittsbereichs gebildet ist, wobei der gekrümmte Bereich an den inneren Randbereich angrenzend gebildet ist. Auf diese Weise lässt sich ein mittlerer Bereich bilden, der besonders vorteilhaft sowohl zur Verteilung des Lichts, als auch zur Anordnung des Sensors bzw. des Funksenders oder -empfängers der Leuchte dienen kann.

Vorzugsweise ist die Formgebung des Lichtleiterelements derart, dass sich der gekrümmte Bereich ausgehend von der Lichteintrittsfläche kontinuierlich erweitert. Dies ist vorteilhaft mit Bezug auf eine gleichmäßige Verteilung des Lichts.

Vorzugsweise weisen das Lichtleiterelement und das Lichtdurchtrittselement normal zu der Ebene betrachtet im Wesentlichen dieselbe Außenkontur auf, wobei sich vorzugsweise ein Durchmesser des Lichtleiterelements und ein Durchmesser des Lichtdurchtrittselements um weniger als 10%, vorzugsweise um weniger als 5% unterscheiden. Auf diese Weise lässt sich bei gegebenem Raumbedarf eine besonders gleichmäßige Lichtabgabe über das Lichtdurchtrittselement erzielen.

Gemäß einem weiteren Aspekt der Erfindung ist eine Leuchte, insbesondere in Form einer Deckenleuchte vorgesehen, die eine Lichtquelle mit LEDs aufweist und ein anmeldungsgemäßes optisches System, wobei die LEDs derart angeordnet sind, dass sie ein Licht erzeugen, das über die Lichteintrittsfläche in das Lichtleiterelement eintritt.

Vorzugsweise ist dabei durch das Lichtdurchtrittselement eine insbesondere plane Lichtabgabefläche der Leuchte gebildet. Dies ist beispielsweise mit Bezug auf eine Reinigung der Leuchte vorteilhaft.

Vorzugsweise weist die Leuchte weiterhin einen Sensor oder einen Funkempfänger oder einen Funksender auf, der in einem Raumbereich angeordnet ist, der durch den gekrümmten Bereich und das Lichtdurchtrittselement begrenzt ist, wobei die Gestaltung derart ist, dass der Sensor bzw. der Funkempfänger bzw. der Funksender mit den LEDs zusammenwirkt.

Die Erfindung wird im Folgenden anhand eines Ausführungsbeispiels und mit Bezug auf die Zeichnungen näher erläutert. Es zeigen:
- Fig. 1: eine Querschnitt-Skizze eines anmeldungsgemäßen optischen Systems mit einem Lichtleiterelement und einem Lichtdurchtrittselement,
- Fig. 2: eine Skizze einer normalen Ansicht des Lichtaustrittsbereichs des Lichtleiterelements,
- Fig. 3: eine Querschnitt-Skizze des separierten Lichtleiterelements,
- Fig. 4: eine perspektivische Skizze des Lichtdurchtrittselements,
- Fig. 5: eine Querschnitt-Skizze einer anmeldungsgemäßen Leuchte,
- Fig. 6: eine Querschnitt-Skizze durch Strukturelemente eines strukturierten Oberflächenbereichs des Lichtdurchtrittselements,
- Fig. 7: eine detailliertere Querschnitt-Skizze durch ein Strukturelement und
- Fig. 8: eine Skizze zu einer Lichtverteilungskurve, die ein Abstrahlverhalten einer anmeldungsgemäßen Leuchte beschreibt.

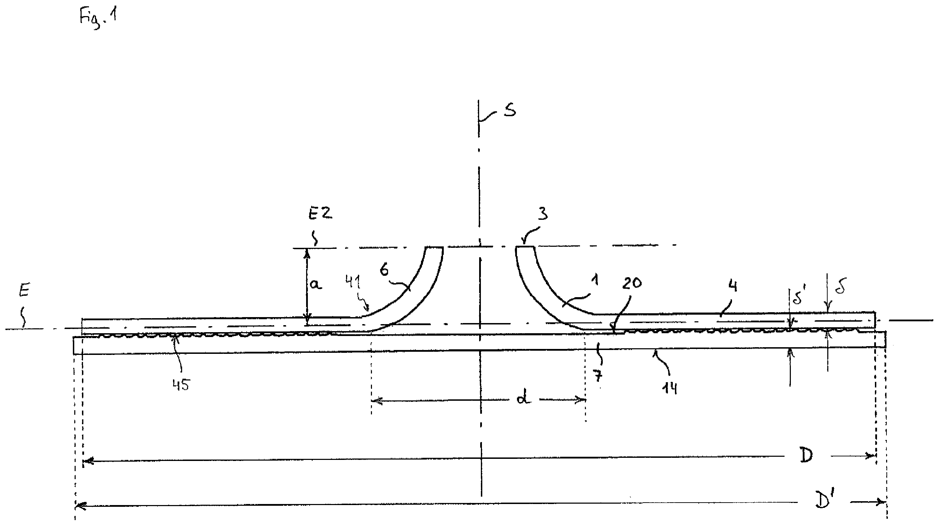

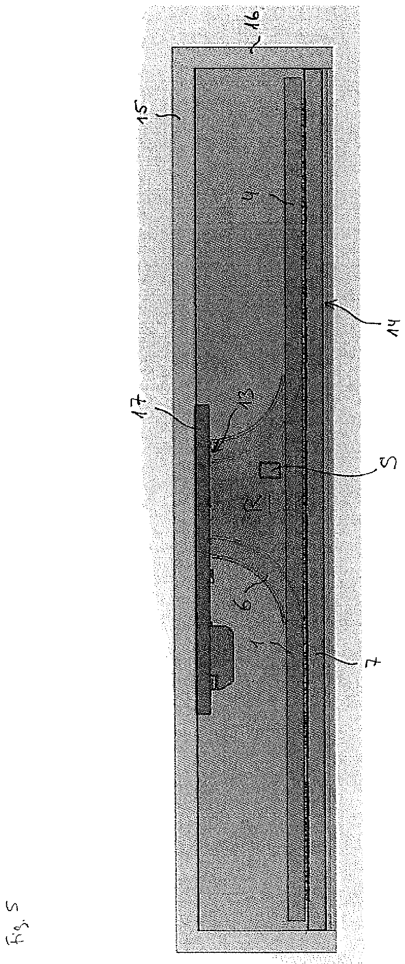

Fig. 1 zeigt eine Querschnitt-Skizze eines anmeldungsgemäßen optischen Systems. Das System ist für eine Leuchte, insbesondere ein Downlight konzipiert; eine entsprechende Leuchte ist beispielhaft in einem entsprechenden Querschnitt in Fig. 5 skizziert.

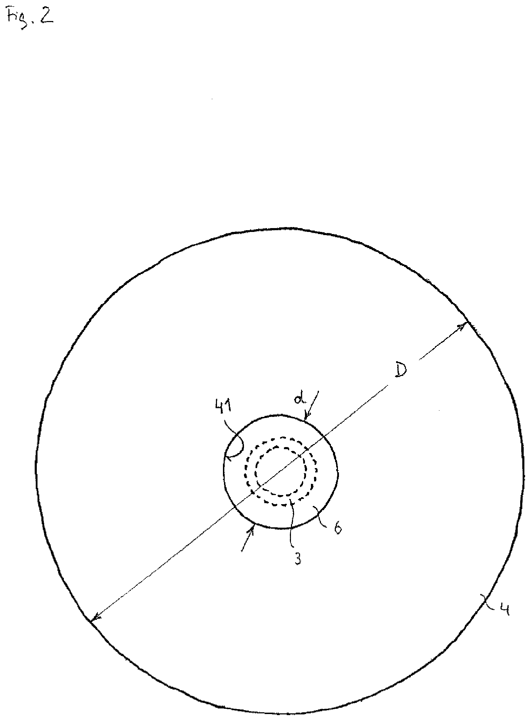

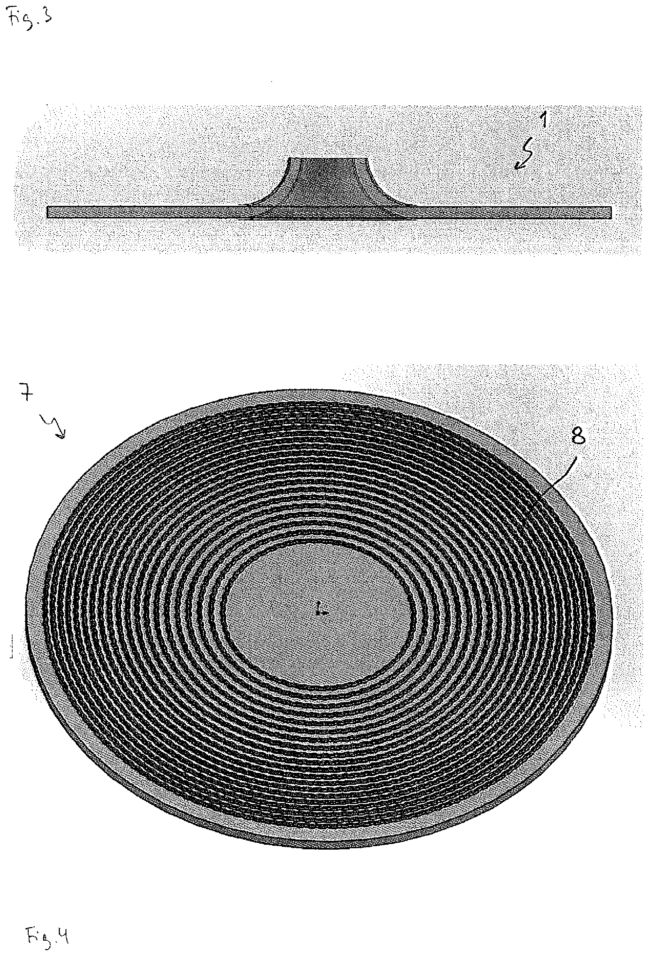

Das System umfasst ein Lichtleiterelement 1 mit einer Lichteintrittsfläche 3 zum Eintritt eines Lichts sowie mit einem Lichtaustrittsbereich 4 zum Austritt des Lichts. Der Lichtaustrittsbereich 4 erstreckt sich dabei beispielsweise - wie im gezeigten Ausführungsbeispiel der Fall - in einer Ebene E. Fig. 2 zeigt eine Skizze des Lichtleiterelements 1 bei Betrachtung normal zu der Ebene E. Wie aus Fig. 2 hervorgeht, ist das Lichtleiterelement 1 beim gezeigten Beispiel so geformt, dass es eine kreisförmige Kontur aufweist. Allerdings kann alternativ auch eine andere Formgebung des Lichtleiterelements 1 vorgesehen sein, beispielsweise mit einer rechteckigen, insbesondere quadratischen Kontur. Fig. 3 zeigt einen skizzierten Querschnitt des separierten Lichtleiterelements 1. Das Lichtleiterelement 1 besteht vorzugsweise aus einem lichtdurchlässigen Material.

Weiterhin umfasst das optische System ein vorzugsweise plattenartiges Lichtdurchtrittselement 7, das sich vorzugsweise parallel zu der Ebene E erstreckt. Die Gestaltung ist dabei derart, dass das Licht nach seinem Eintritt in das Lichtleiterelement 1 über die Lichteintrittsfläche 3 zu dem Lichtaustrittsbereich 4 gelangt, dort aus dem Lichtleiterelement 1 austritt und anschließend das Lichtdurchtrittselement 7 durchsetzt. Für die Beschreibung sei davon ausgegangen, dass das optische System so ausgerichtet ist, dass die Ebene E horizontal orientiert ist und das Lichtdurchtrittselement 7 unterhalb des Lichtleiterelements 1 angeordnet ist. So orientiert, durchsetzt das Licht nach seinem Austritt aus dem Lichtleiterelement 1 das Lichtdurchtrittselement 7 also von oben nach unten. Das Lichtdurchtrittselement 7 besteht vorzugsweise aus einem lichtdurchlässigen Material.

Das Lichtleiterelement 1 und das Lichtdurchtrittselement 7 sind dabei optisch dicht verbunden.

Das Lichtleiterelement 1 weist weiterhin vorzugsweise einen, an den Lichtaustrittsbereich 4 angrenzenden, aus der Ebene E heraus gekrümmten Bereich 6 auf, an dem die Lichteintrittsfläche 3 gebildet ist. Im gezeigten Beispiel befindet sich die Lichteintrittsfläche 3 oberhalb der Ebene E; der gekrümmte Bereich 6 krümmt sich also mit Bezug auf die Ebene E auf einer Seite heraus, die dem Lichtdurchtrittselement 7 gegenüber liegt.

Wie im gezeigten Beispiel der Fall, ist die Formgebung dabei vorzugsweise derart, dass sich die Lichteintrittsfläche 3 in einer weiteren Ebene E2 erstreckt, die parallel zu der zuerst genannten Ebene E orientiert ist. Insbesondere kann - wie beispielhaft skizziert - die Lichteintrittsfläche 3 ringförmig, besonders bevorzugt kreisringförmig gestaltet sein.

Das optische System umfasst also zwei optische Elemente: das Lichtleiterelement 1 und das Lichtdurchtrittselement 7, wobei das Lichtdurchtrittselement 7 dem Lichtleiterelement 1 optisch nachgeordnet ist. Vorzugsweise weist das optische System außer diesen beiden optischen Elementen 1, 7 kein weiteres optisches Element auf.

Vorzugsweise ist der Lichtaustrittsbereich 4 sich in der Ebene E ringartig geschlossen erstreckend gestaltet, insbesondere in einer Kreisringform, so dass hierdurch ein, in der Ebene E verlaufender innerer Randbereich 41 des Lichtaustrittsbereichs 4 gebildet ist, wobei der gekrümmte Bereich 6 an den inneren Randbereich 41 angrenzend gebildet ist. Weiterhin vorzugsweise ist die Formgebung des Lichtleiterelements 1 derart, dass sich der gekrümmte Bereich 6 ausgehend von der Lichteintrittsfläche 3 kontinuierlich erweitert, beispielsweise trichterartig. So lässt sich erzielen, dass das durch die Lichteintrittsfläche 3 in das Lichtleiterelement 1 eingetretene Licht besonders wirkungsvoll über den gekrümmten Bereich 6 zu dem Lichtaustrittsbereich 4 geleitet wird. Wie als solches bekannt, kann das Lichtleiterelement 1, insbesondere der gekrümmte Bereich 6 hierzu derart geformt sein, dass das Licht über Totalreflexionen geleitet wird. Vorzugsweise geht der gekrümmte Bereich 6 dementsprechend kontinuierlich in den Lichtaustrittsbereich 4 über.

Vorzugsweise ist die Gestaltung dabei derart, dass sich die Lichteintrittsfläche 3 vergleichsweise nahe an der Ebene E befindet. Auf diese Weise lässt sich das optische System mit einer Erstreckung normal zu der Ebene E gestalten, die vergleichsweise klein ist. Dies ist insbesondere von Vorteil, wenn das optische System als Teil der Leuchte bzw. des Downlights verwendet wird, wie in Fig. 5 im Querschnitt skizziert, wobei die Ebene E horizontal orientiert ist, wenn die Leuchte wie für einen Betrieb vorgesehen gegenüber der Vertikalen ausgerichtet ist. Mit anderen Worten kann hier die Leuchte auf diese Weise mit besonders geringer Bauhöhe gestaltet werden.

Beispielsweise kann die Gestaltung hierzu derart sein, dass der plattenartige Lichtaustrittsbereich 4 einen Durchmesser D aufweist und dabei die weitere Ebene E2 von der zuerst genannten Ebene E einen Abstand a aufweist, der kleiner ist als die Hälfte des Durchmessers D, vorzugsweise kleiner als ein Viertel des Durchmessers D. Der innere Randbereich 41 kann dabei einen inneren Durchmesser d aufweisen, wobei gilt: d ≤ 0,7 D, bevorzugt d ≤ 0,5 D, besonders bevorzugt d ≤ 0,4 D. Der Lichtaustrittsbereich 4 hat so also beispielsweise eine kreisringförmige Fläche mit dem äußeren Durchmesser D und dem inneren Durchmesser d, wobei die kreisringförmige Fläche vorzugsweise homogen gestaltet ist, also keinerlei Öffnungen oder anderweitige Strukturierungen aufweist. Besonders bevorzugt ist der nach unten weisende Oberflächenbereich des Lichtaustrittsbereichs 4 plan gestaltet.

Die beschriebene ringartige Form des Lichtaustrittsbereichs 4 führt in Verbindung mit der plattenartigen Gestaltung des Lichtdurchtrittselements 7 dazu, dass das Licht auf der nach unten weisenden Oberfläche des Lichtdurchtrittselements 7 eine entsprechende ringartige, hell erscheinende Lichtfläche bildet, also beispielsweise eine ebenfalls etwa kreisringförmige Lichtfläche mit etwa dem äußeren Durchmesser D und etwa dem inneren Durchmesser d. Ein zentraler Bereich des Lichtdurchtrittselements 7, dessen Außengrenze im Wesentlichen der normalen Projektion des inneren Randbereichs 41 des Lichtabgabebereichs 4 entspricht, erscheint also weniger hell bzw. nicht hell. Über diesen zentralen Bereich tritt aus dem Lichtdurchtrittselement 7 allenfalls Streulicht aus.

Allerdings ist im Allgemeinen der gekrümmte Bereich 6 nicht zwingend erforderlich. Beispielsweise kann das Lichtleiterelement 1 insgesamt plattenförmig sein und dabei eine zentrale, insbesondere kreisförmige Öffnung aufweisen, wobei deren senkrecht zu der Ebene E verlaufende Randbereichsfläche die Lichteintrittsfläche bilden kann.

Eine besonders homogene Lichtabgabe bzw. besonders homogen erscheinende Lichtfläche auf dem Lichtdurchtrittselement 7 lässt sich erzielen, wenn - wie in den Figuren skizziert - das Lichtleiterelement 1 mit Bezug auf eine, senkrecht zu der Ebene E orientierten Achse S rotationssymmetrisch geformt ist. Vorzugsweise ist dabei auch das Lichtdurchtrittselement 7 entsprechend symmetrisch bzw. kreisförmig geformt.

Eine besonders kompakte Gestaltung des Systems ist ermöglicht, wenn das Lichtleiterelement 1 und das Lichtdurchtrittselement 7 normal zu der Ebene E betrachtet im Wesentlichen dieselbe Außenkontur aufweisen. Beispielsweise kann vorgesehen sein, das sich der Durchmesser D des Lichtleiterelements 1 und ein Durchmesser D' des Lichtdurchtrittselement 7 um weniger als 10%, vorzugsweise um weniger als 5% unterscheiden.

Für eine senkrecht zu der Ebene E gemessene Stärke δ des Lichtaustrittsbereichs 4 kann vorgesehen sein, dass diese Stärke δ weniger als 10%, vorzugsweise weniger als 5%, besonders bevorzugt weniger als 4% von dem Durchmesser D beträgt.

Für eine senkrecht zu der Ebene E gemessene Stärke δ' des Lichtdurchtrittselements 7 kann vorgesehen sein, dass diese Stärke δ' weniger als 10%, vorzugsweise weniger als 5%, besonders bevorzugt weniger als 4% von dem Durchmesser D' beträgt.

Vorzugsweise weist das Lichtdurchtrittselement 7 normal zu der Ebene E betrachtet dieselbe Form auf wie das Lichtleiterelement 1 - im gezeigten Beispiel eine Kreisform. Fig. 4 zeigt eine perspektivische skizzenartige Ansicht des separierten Lichtdurchtrittselements 7 von schräg oben.

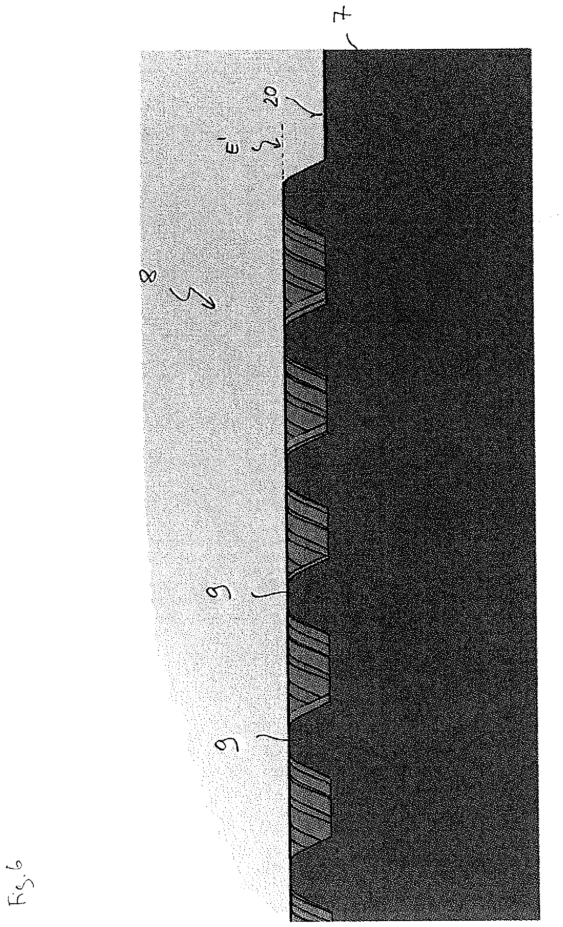

Um einen besonders wirkungsvollen Übertritt des Lichts von dem Lichtaustrittsbereich 4 des Lichtleiterelements 1 in das Lichtdurchtrittselement 7 zu ermöglichen, ist an dem Lichtdurchtrittselement 7 oder an dem Lichtaustrittsbereich 4 des Lichtleiterelements 1 ein strukturierter Oberflächenbereich 8 gebildet. Beim gezeigten Beispiel ist der strukturierte Oberflächenbereich 8 - wie beispielhaft in Fig. 4 skizziert - an der zum Lichtleiterelement 1 hin weisenden bzw. nach oben weisenden Seite des Lichtdurchtrittselements 7 ausgebildet. Einen skizzierten Querschnitt senkrecht zu der Ebene E durch einen Teil des strukturierten Oberflächenbereichs 8 zeigt Fig. 6. Alternativ könnte der strukturierte Oberflächenbereich 8 in analoger Ausgestaltung auf der nach unten weisenden Seite des Lichtaustrittsbereichs 4 ausgebildet sein.

Wenn der strukturierte Oberflächenbereich 8 - wie in den Figuren skizziert - an dem Lichtdurchtrittselement 7 ausgebildet ist, weist vorzugsweise das Lichtleiterelement 1, insbesondere dessen Lichtaustrittsbereich 4 einen planen Oberflächenbereich 45 zur Kontaktierung mit dem strukturierten Oberflächenbereich 8 auf. Wenn entsprechend anders herum der strukturierte Oberflächenbereich an dem Lichtleiterelement 1 bzw. dessen Lichtaustrittsbereich 4 ausgebildet ist, weist vorzugsweise das Lichtduchtrittselement 1 einen entsprechenden planen Oberflächenbereich zur Kontaktierung mit dem strukturierten Oberflächenbereich auf.

In beiden Fällen ist die Gestaltung weiterhin derart, dass das Lichtleiterelement 1 und das Lichtdurchtrittselement 7 lediglich über eine, den strukturierten Oberflächenbereich 8 gebildete Kontaktfläche miteinander verbunden sind.

Erfindungsgemäß weist der strukturierte Oberflächenbereich 8 Strukturelemente 9 auf, die insbesondere bevorzugt prismenartig bzw. zumindest in erster Näherung prismenförmig geformt sind.

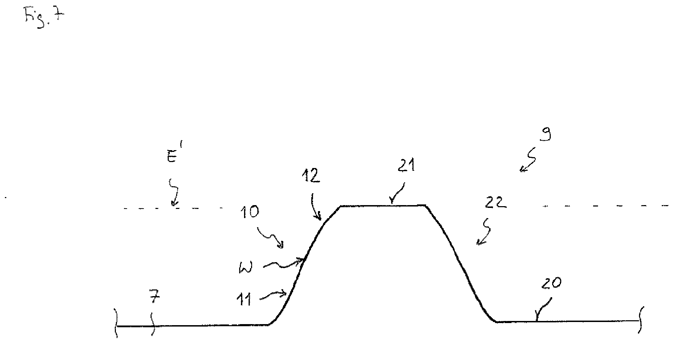

Erfindungsgemäß sind die Strukturelemente 9 derart geformt, dass sie in einem Querschnitt - insbesondere in einem Querschnitt senkrecht zu der Ebene E - betrachtet in erster Näherung eine Trapezform, insbesondere eine symmetrische oder eine asymmetrische Trapezform aufweisen. Fig. 7 zeigt einen entsprechenden Querschnitt durch eines der Strukturelemente 9 in separierter Form. Vorzugsweise sind alle Strukturelemente 9 mit Bezug auf diese annähernde Trapezform analog gestaltet. Dies ist jedoch nicht zwingend erforderlich, im Allgemeinen können die Strukturelemente 9 auch unterschiedliche Formen aufweisen. Im Folgenden wird eine mögliche Formgebung wenigstens eines der Strukturelemente 9 näher beschrieben.

Im gezeigten Beispiel weist diejenige Seite des Lichtdurchtrittselements 7, die zu dem Lichtleiterelement 1 weist, also die nach oben weisende Seite, einen planen, sich insbesondere parallel zu der Ebene E erstreckenden Oberflächenbereich 20 auf, von dem aus das Strukturelement 9 erhaben ausgebildet ist - bzw. die Strukturelemente 9 jeweils erhaben ausgebildet sind.

Vorzugsweise weist das Strukturelement 9 in dem Querschnitt betrachtet eine plane Kontaktfläche 21 zur Kontaktierung des Lichtaustrittsbereichs 4 des Lichtleiterelements 1 auf. Dabei kann durch die Kontaktflächen 21 aller Strukturelemente 9 insbesondere die oben erwähnte Kontaktfläche gebildet sein, über die das Lichtleiterelement 1 und das Lichtdurchtrittselement 7 lediglich miteinander verbunden sind.

Diese Kontaktierung kann dabei entweder unmittelbar oder mittelbar, beispielsweise über eine Klebstoffschicht gebildet sein (der Übersichtlichkeit halber ist in den Figuren 6 und 7 das Lichtleiterelement 1 nicht skizziert). Die plane Kontaktfläche 21 erstreckt sich dementsprechend vorzugsweise in einer Ebene E' parallel zu der zuerst genannten Ebene E, in der sich der Lichtaustrittsbereich 4 des Lichtleiterelements 1 erstreckt. Die Kontaktfläche 21 kann dabei insbesondere die obere Grundfläche der genannten Trapezform beschreiben.

Erfindungsgemäß weist das Strukturelement 9 in dem Querschnitt betrachtet einen seitlichen Flankenbereich 10 mit einem Wendepunkt W auf, so dass ein erster Flankenteilbereich 11 gebildet ist, der eine konkave Krümmung aufweist und ein zweiter Flankenteilbereich 12, der eine konvexe Krümmung aufweist, wobei vorzugsweise der Verlauf des Flankenbereichs 10 durch eine Spline-Funktion beschrieben ist. Dieser seitliche Flankenbereich 10 bildet dabei näherungsweise einen der beiden Schenkel der genannten Trapezform. An den Oberflächenbereich 20 des Lichtdurchtrittselements 7 schließt sich dabei zunächst der erste Flankenteilbereich 11 an, durch den die konkave Krümmung gebildet ist; über den Wendepunkt W geht dann der erste Flankenteilbereich 10 in den zweiten Flankenteilbereich 12 über, durch den die konvexe Krümmung gebildet ist. An seinem oberen Ende grenzt der Flankenbereich 10 vorzugsweise unmittelbar an die plane Kontaktfläche 21.

Mit Bezug auf die Kontaktfläche 21 ist auf der, dem Flankenbereich 10 gegenüberliegenden Seite der zweite Schenkel der Trapezform durch einen weiteren seitlichen Flankenbereich 22 des Strukturelements 9 gebildet, der vorzugsweise analog zu dem zuerst genannten seitlichen Flankenbereich 10 gebildet ist. Die beiden genannten Flankenbereiche 10, 22 sind also ausgehend von der planen Kontaktfläche 21 auf den Oberflächenbereich 20 zu divergierend gestaltet.

Die Kontaktflächen 21 der Strukturelemente 9 liegen vorzugsweise alle in der Ebene E'.

Durch die beschriebene Kontaktbildung zwischen dem Lichtdurchtrittselement 7 und dem Lichtaustrittsbereich 4 des Lichtleiterelements 1 über die Kontaktflächen 21 der Strukturelemente 9 wird erzielt, dass das Licht aus dem Lichtaustrittsbereich 4 heraustritt und in die Strukturelemente 9 und weiter in das Lichtdurchtrittselement 7 eintritt. An den genannten Flankenbereichen 10, 22 der Strukturelemente 9 kommt es dabei zu Totalreflexionen. Durch die wie beschrieben gebildeten Flankenbereiche 10, 22 lässt sich dabei eine besonders vorteilhafte Richtungsverteilung der Lichtstrahlen des Lichts bewirken.

Lichtstrahlen, die in dem Lichtaustrittsbereich 4 verlaufen und an einer Stelle auf die untere Begrenzung des Lichtleiterelements 1 treffen, an der sich keine Kontaktfläche 21 befindet, werden dort in der Regel totalreflektiert und wandern innerhalb des Lichtleiterelements 1 weiter.

Vorzugsweise ist der einzige Kontakt zwischen dem Lichtleiterelement 1 und dem Lichtdurchtrittselement 7 durch die genannten Kontaktflächen 21 gebildet.

Wie weiter oben bereits kurz erwähnt, durchsetzt das Licht das Lichtdurchtrittselement 7, so dass es nach Eintritt über die Kontaktflächen 21 das Lichtdurchtrittselement 7 über seine, dem Lichtleiter 1 abgewandte Seite - hier also seine Unterseite - wieder verlässt. Die entsprechende nach unten weisende Oberfläche des Lichtdurchtrittselements 7 kann dementsprechend als Lichtabgabefläche 14 des optischen Systems bezeichnet werden. Vorzugsweise ist die Lichtabgabefläche 14 plan gestaltet, wobei sie sich parallel zur Ebene E erstreckt. Wie weiter oben bereits beschrieben, kann auf dieser Fläche, also der Lichtabgabefläche 14 durch das dort austretende Licht eine ringartig geformte, gleichmäßig hell erscheinende Lichtfläche gebildet sein.

Wie aus der perspektivischen Skizze der Fig. 4 andeutungsweise hervorgeht, kann die Gestaltung derart sein, dass die Strukturelemente 9 in einem Schnitt parallel zu der Ebene E betrachtet konzentrische Ringe bilden. Insgesamt kann der strukturierte Oberflächenbereich 8 beispielsweise mehr als fünf, vorzugsweise mehr als zehn, beispielsweise zwischen fünfzehn und dreißig Strukturelemente 9 aufweisen, durch die in entsprechender Anzahl die konzentrischen Ringe gebildet sind.

Allgemeiner formuliert sind die Strukturelemente 9 vorzugsweise derart gestaltet, dass sie mit Bezug auf die Lichteintrittsfläche 3 eine konzentrische Anordnung bilden. Dabei ist es nicht zwingend erforderlich, dass die Strukturelemente durchgehende bzw. geschlossene Ringe bilden; so können sie beispielsweise auch kreisabschnittförmige Haupterstreckungen aufweisen oder lineare Haupterstreckungen, wobei sie im zuletzt genannten Fall dann vorzugsweise derart ausgerichtet angeordnet sind, dass sie in Verbindung miteinander die konzentrische Anordnung ergeben.

Eine besonders gleichmäßige vorteilhafte Lichtabgabe über die Lichtabgabefläche 14 des Lichtdurchtrittselements 7 lässt sich erzielen, wenn wenigstens eines der Strukturelemente 9 in einem Schnitt parallel zu der Ebene E betrachtet eine Haupterstreckung, beispielsweise eine kreis- oder kreisabschnittförmige Haupterstreckung aufweist, wobei dieser Haupterstreckung eine Wellenform überlagert ist.

Es ist also beispielsweise entlang einer Kreislinie sozusagen in kleinerer Skala eine überlagerte Schlangenlinienform gebildet. Durch diese Gestaltung lässt sich erzielen, dass die Lichtstrahlen unter unterschiedlichsten Winkeln auf die genannten Flankenbereiche 10, 22 der Strukturelemente 9 treffen und dementsprechend auch in unterschiedlicher Weise abgelenkt werden.

Im dargestellten Ausführungsbeispiel ist die überlagerte Wellenform durch abwechselnd entgegengesetzt ausgerichtete, aneinandergrenzende halbkreisförmige oder kreisabschnittförmige Abschnitte gebildet. Alternativ hierzu könnte jedoch beispielsweise auch eine Sinusform gewählt sein. Beispielsweise kann vorgesehen sein, dass über den vollen Kreis betrachtet zwischen zehn und zweihundert derartige Wellenabschnitte gebildet sind.

Die beschriebene ringartige Ausbildung der Strukturelemente 9 bietet sich insbesondere an, wenn das Lichtleiterelement 1 und das Lichtdurchtrittselement 7 - wie hier gezeigt - normal zu der Ebene E betrachtet eine kreisförmige Kontur aufweisen. Wie oben bereits erwähnt, kann jedoch im Allgemeinen auch eine andersartige Konturform gewählt sein, beispielsweise können die beiden genannten optischen Elemente 1, 7 eine rechteckförmige oder spezieller eine quadratische Konturform aufweisen. Insbesondere in einem solchen Fall können die Strukturelemente 9 andersartig gestaltet sein, beispielsweise durch einzelne prismenförmige Elemente, die in dem Schnitt parallel zur Ebene E betrachtet keine, zumindest keine ausgeprägte längliche Haupterstreckung aufweisen, wobei diese Prismen dann dementsprechend mit ihren Deckflächen, die entsprechend in der Ebene E' liegen, den Lichtaustrittsbereich 4 des Lichtleiterelements 1 kontaktieren.

Wenn der strukturierte Oberflächenbereich 8 - wie oben erwähnt - alternativ an der Unterseite des Lichtaustrittsbereichs 4 des Lichtleiterelements 1 ausgebildet ist, ist vorzugsweise die gegenüberliegende Oberseite des Lichtdurchtrittselements 7 plan gestaltet.

Vorzugsweise sind das Lichtleiterelement 1 und das Lichtdurchtrittselement 7 fest miteinander verbunden, beispielsweise miteinander verklebt oder miteinander verschmolzen. Um die zuletzt genannte Verbindung herzustellen, kann beispielsweise vorgesehen sein, dass eine der betreffenden Oberflächen zunächst leicht angeschmolzen wird und dann im angeschmolzenen Zustand mit der anderen Oberfläche verbunden wird.

Durch die beschriebene Gestaltung des strukturierten Oberflächenbereichs 8 bzw. der Strukturelemente 9 lässt sich insbesondere erzielen, dass die auf der Lichtabgabefläche 14 des Lichtdurchtrittselements 7 gebildete ringartige Lichtfläche besonders ebenmäßig bzw. gleichförmig hell erscheint.

Wie erwähnt und beispielhaft in Fig. 5 angedeutet, kann das optische System insbesondere als Teil einer Leuchte, beispielsweise eines Downlights verwendet werden. Die Leuchte weist vorzugsweise ein Gehäuse 15 mit einer insbesondere umlaufend gestalteten Seitenwand 16 auf, durch die ein nach unten weisender Lichtabgabebereich der Leuchte gebildet ist. Die Lichtdurchtrittsplatte 7 des optischen Systems ist dabei vorzugsweise in diesem Lichtabgabebereich angeordnet. Vorzugsweise ist vorgesehen, dass die Lichtabgabefläche 14 der Lichtdurchtrittsplatte 7 eine Außenfläche der Leuchte bildet, also mit anderen Worten die Leuchte kein, der Lichtdurchtrittsplatte 7 nachgeordnetes weiteres optisches Element mehr aufweist.

Vorzugsweise ist zwischen der äußeren Begrenzung des Lichtdurchtrittselements 7 und der inneren Begrenzung der Seitenwand 16 des Gehäuses 15 kein weiteres Bauteil der Leuchte angeordnet; insbesondere kann vorgesehen sein, dass das Lichtdurchtrittselement 7 unmittelbar an die Seitenwand 16 angrenzt. So lässt sich mit der Leuchte eine Lichtfläche bewirken, die sich quasi bis an den seitlichen Rand der Leuchte erstreckt. Insbesondere muss zwischen dem Lichtdurchtrittselement 7 und der Seitenwand 16 kein Raum für die Anordnung einer Lichtquelle vorgesehen werden.

Die Leuchte weist vorzugsweise eine LED-Lichtquelle mit LEDs 13 auf, die derart - insbesondere auf einer beispielsweise kreisförmigen Platine 17 - angeordnet sind, dass sie ein Licht abstrahlen können, das über die Lichteintrittsfläche 3 in das Lichtleiterelement 1 eintritt. Die Platine 17 kann sich dabei in einer Ebene parallel zu der Ebene E erstreckend angeordnet sein. Dabei kann insbesondere vorgesehen sein, dass die Leuchte zwischen den LEDs 13 und der Lichteintrittsfläche 3 kein optisches Element zur Beeinflussung des von den LEDs 13 abgegebenen Lichts aufweist.

Im gezeigten Beispiel wandert das Licht im Weiteren wie vorgesehen über den gekrümmten Bereich 6 in den Lichtaustrittsbereich 4, gelangt von dort über die Strukturelemente 9 in das Lichtdurchtrittselement 7 und verlässt schließlich Letzteres über seine nach unten weisende Lichtabgabefläche 14.

Wenn das Lichtleiterelement, wie oben als alternative Gestaltung erwähnt, insgesamt plattenförmig ist und die Lichteintrittsfläche durch die Randbereichsfläche einer zentralen Öffnung gebildet ist, können die LEDs so angeordnet sein, dass ihre Hauptlichtabgaberichtungen parallel zu der Ebene E orientiert verlaufen.

Durch die beschriebene Gestaltung, insbesondere der Strukturelemente 9 wird ermöglicht, dass das von der Leuchte nach unten abgegebene Licht innerhalb eines Raumwinkelbereichs abgegeben wird, der so begrenzt ist, dass eine Blendung eines Nutzers der Leuchte praktisch ausgeschlossen ist; mit anderen Worten kann mit der Leuchte ein blendfreies Licht abgegeben werden.

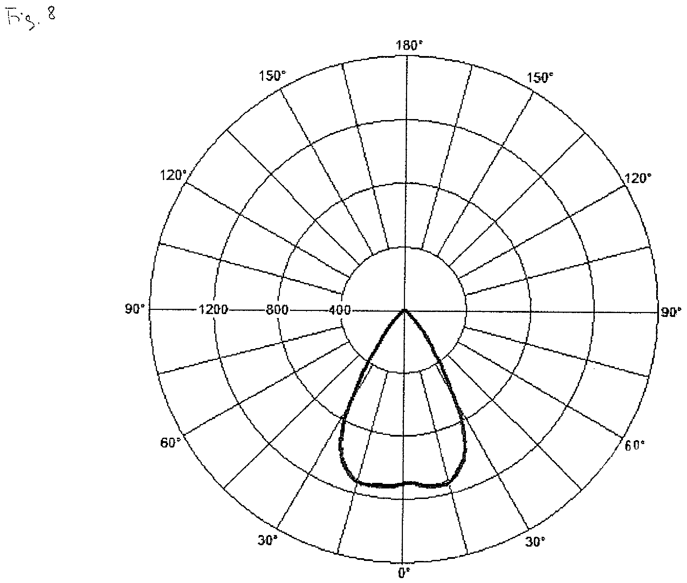

In Fig. 8 ist beispielhaft eine entsprechende Lichtverteilungskurve skizziert. Beispielsweise lässt sich hierbei erzielen, dass mit Bezug auf die Intensität des abgegebenen Lichts mehr als 90% in einen Raumwinkelbereich abgegeben wird, der sich mit Bezug auf die nach unten weisende Vertikale in radial symmetrischer Form lediglich zwischen 0° und 40° erstreckt. Eine Deckenleuchte mit einer derartig begrenzten Lichtabgabe eignet sich beispielsweise besonders für den Einsatz in einem Raum mit einer vergleichsweise großen Raum- bzw. Deckenhöhe.

Wie in Fig. 5 angedeutet, lässt sich ein Raumbereich R, der seitlich durch den gekrümmten Bereich 6 des Lichtleiterelements 1 begrenzt ist, nach unten durch das Lichtdurchtrittselement 7 und nach oben durch die LED-Lichtquelle bzw. die Platine 17, besonders vorteilhaft zur Anordnung eines Sensors oder Funksenders oder Funkempfängers S der Leuchte nutzen. Durch diese Anordnung lässt sich erzielen, dass der Sensor oder Funksenders oder Funkempfängers S lediglich durch das Lichtdurchtrittselement 7 von dem Außenbereich der Leuchte getrennt ist.

Vorzugsweise ist dabei die Gestaltung derart, dass der Sensor bzw. der Funkempfänger bzw. der Funksender S mit den LEDs 13 zusammenwirkt, beispielsweise über eine Steueranordnung zur Ansteuerung der LED-Lichtquelle.

Mit einer anmeldungsgemäßen Leuchte lässt sich insbesondere erzielen, dass das Licht bei geringer Bauhöhe der Leuchte in besonders gleichförmiger Weise und dabei blendfrei abgegeben wird. Zudem ist eine besonders vorteilhafte Anordnung eines Sensors oder Funkempfängers oder Funksenders S ermöglicht.

## Patentansprüche

1. Optisches System für eine Leuchte, insbesondere für ein Downlight, aufweisend
- ein Lichtleiterelement (1) mit einer Lichteintrittsfläche (3) zum Eintritt eines Lichts und mit einem Lichtaustrittsbereich (4) zum Austritt des Lichts und
- ein Lichtdurchtrittselement (7),
wobei die Gestaltung derart ist, dass das Licht nach dem Austritt aus dem Lichtleiterelement (1) das Lichtdurchtrittselement (7) durchsetzt,
wobei zum Austritt des Lichts aus dem Lichtaustrittsbereich (4) des Lichtleiterelements (1) an einem der beiden Bauteile Lichtdurchtrittselement (7) oder Lichtleiterelement (1) ein strukturierter Oberflächenbereich (8) gebildet ist, der eine Kontaktfläche bildet, durch die das Lichtleiterelement (1) und das Lichtdurchtrittselement (7) miteinander verbunden sind,
und wobei der strukturierte Oberflächenbereich (8) Strukturelemente (9) aufweist, die in einem Querschnitt betrachtet in erster Näherung eine Trapezform aufweisen,
**dadurch gekennzeichnet,**
**dass** die Strukturelemente (9) in dem Querschnitt betrachtet einen seitlichen Flankenbereich (10) mit einem Wendepunkt (W) aufweisen, so dass ein erster Flankenteilbereich (11) gebildet ist, der eine konkave Krümmung aufweist und ein zweiter Flankenteilbereich (12), der eine konvexe Krümmung aufweist.

2. Optisches System nach Anspruch 1,
**dadurch gekennzeichnet,**
**dass** das Lichtleiterelement (1) und das Lichtdurchtrittselement (7) fest miteinander verbunden sind, beispielsweise miteinander verklebt sind oder miteinander verschmolzen sind.

3. Optisches System nach Anspruch 1 oder 2,
**dadurch gekennzeichnet,**
**dass** das Bauteil welches nicht den strukturierten Oberflächenbereich (8) aufweist, einen planen Oberflächenbereich zur Kontaktierung mit dem strukturierten Oberflächenbereich (8) aufweist.

4. Optisches System nach einem der vorhergehenden Ansprüche,
**dadurch gekennzeichnet,**
**dass** das Lichtleiterelement (1) und das Lichtdurchtrittselement (7) lediglich über die durch den strukturierten Oberflächenbereich (8) gebildete Kontaktfläche miteinander verbunden sind.

5. Optisches System nach einem der vorhergehenden Ansprüche,
**dadurch gekennzeichnet,**
**dass** die Strukturelemente (9) eine symmetrische oder eine asymmetrische Trapezform aufweisen.

6. Optisches System nach einem der vorhergehenden Ansprüche,
**dadurch gekennzeichnet,**
**dass** der Verlauf des Flankenbereichs (10) durch eine Spline-Funktion beschrieben ist.

7. Optisches System nach einem der vorhergehenden Ansprüche,
**dadurch gekennzeichnet,**
**dass** die Strukturelemente (9) derart gestaltet sind, dass sie mit Bezug auf die Lichteintrittsfläche (3) eine konzentrische Anordnung bilden.

8. Optisches System nach einem der vorhergehenden Ansprüche,
**dadurch gekennzeichnet,**
**dass** sich der Lichtaustrittsbereich (4) des Lichtleiterelements (1) in einer Ebene (E) erstreckt, wobei das Lichtleiterelement (1) außerdem einen, an den Lichtaustrittsbereich (4) angrenzenden, aus der Ebene (E) heraus gekrümmten Bereich (6) aufweist, an dem die Lichteintrittsfläche (3) gebildet ist.

9. Optisches System nach Anspruch 8,
**dadurch gekennzeichnet,**
**dass** das Lichtdurchtrittselement (7) plattenartig gestaltet ist und sich parallel zu der Ebene (E) erstreckend angeordnet ist.

10. Optisches System nach Anspruch 8,
**dadurch gekennzeichnet,**
**dass** zumindest eines der Strukturelemente (9) in einem Schnitt parallel zu der Ebene (E) betrachtet eine kreisförmige oder kreisabschnittförmige Haupterstreckung aufweist, sowie eine, der Haupterstreckung überlagerte Wellenform.

11. Optisches System nach Anspruch 8,
**dadurch gekennzeichnet,**
**dass** der Lichtaustrittsbereich (4) sich in der Ebene (E) ringartig geschlossen erstreckend gestaltet ist, so dass hierdurch ein, in der Ebene (E) verlaufender innerer Randbereich (41) des Lichtaustrittsbereichs (4) gebildet ist, wobei der gekrümmte Bereich (6) an den inneren Randbereich (41) angrenzend gebildet ist.

12. Optisches System nach Anspruch 8,
**dadurch gekennzeichnet,**
**dass** die Formgebung des Lichtleiterelements (1) derart ist, dass sich der gekrümmte Bereich (6) ausgehend von der Lichteintrittsfläche (3) kontinuierlich erweitert.

13. Optisches System nach einem der vorhergehenden Ansprüche,
**dadurch gekennzeichnet,**
**dass** das Lichtleiterelement (1) und das Lichtdurchtrittselement (7) normal zu der Ebene (E) betrachtet im Wesentlichen dieselbe Außenkontur aufweisen, wobei sich vorzugsweise ein Durchmesser (D) des Lichtleiterelements (1) und ein Durchmesser (D') des Lichtdurchtrittselements (7) um weniger als 10%, vorzugsweise um weniger als 5% unterscheiden.

14. Leuchte, insbesondere Deckenleuchte, aufweisend
- eine Lichtquelle mit LEDs (13) und
- ein optisches System nach einem der vorhergehenden Ansprüche,
wobei die LEDs (13) derart angeordnet sind, dass sie ein Licht erzeugen, das über die Lichteintrittsfläche (3) in das Lichtleiterelement (1) eintritt, wobei vorzugsweise durch das Lichtdurchtrittselement (7) eine insbesondere plane Lichtabgabefläche (14) der Leuchte gebildet ist.

15. Leuchte nach Anspruch 14, wobei das optische System die im Anspruch 8 genannten Merkmale aufweist,
**gekennzeichnet durch**
- einen Sensor oder einen Funkempfänger oder einen Funksender (S), der in einem Raumbereich (R) angeordnet ist, der durch den gekrümmten Bereich (6) und das Lichtdurchtrittselement (7) begrenzt ist, wobei die Gestaltung derart ist, dass der Sensor bzw. der Funkempfänger bzw. der Funksender (S) mit den LEDs zusammenwirkt.

## Claims

1. Optical system for a luminaire, in particular for a downlight, comprising:
- a light guide element (1) having a light entry surface (3) for the entry of a light and having a light exit region (4) for the exiting of the light and
- a light passage element (7),
wherein the design is such that the light passes through the light passage element (7) after exiting the light guide element (1),
wherein, for the exiting of the light from the light exit region (4) of the light guide element (1), a structured surface region (8) is formed on one of the following two components: the light passage element (7) or the light guide element (1), which structured surface region (8) forms a contact surface by means of which the light guide element (1) and the light passage element (7) are connected to each other,
and wherein the structured surface region (8) has structural elements (9) which have, in a first approximation, a trapezoidal shape when viewed in a cross section,
**characterized in that**
the structural elements (9), when viewed in the cross section, have a lateral flank region (10) having an inflection point (W), such that a first flank sub-region (11) having a concave curvature and a second flank sub-region (12) having a convex curvature are formed.

2. Optical system according to claim 1,
**characterized in that**
the light guide element (1) and the light passage element (7) are fixedly connected to each other, for example are glued to each other or fused to each other.

3. Optical system according to claim 1 or 2,
**characterized in that**
the component that does not have the structured surface region (8) has a planar surface region for contacting with the structured surface region (8).

4. Optical system according to any one of the preceding claims,
**characterized in that**
the light guide element (1) and the light passage element (7) are connected to each other only by means of the contact surface formed by the structured surface region (8).

5. Optical system according to any one of the preceding claims,
**characterized in that**
the structural elements (9) have a symmetrical or asymmetrical trapezoidal shape.

6. Optical system according to any one of the preceding claims,
**characterized in that**
the profile of the flank region (10) is described by a spline function.

7. Optical system according to any one of the preceding claims,
**characterized in that**
the structural elements (9) are designed such that they form a concentric arrangement with respect to the light entry surface (3).

8. Optical system according to any one of the preceding claims,
**characterized in that**
the light exit region (4) of the light guide element (1) extends in a plane (E), wherein the light guide element (1) also has a region (6) which adjoins the light exit region (4) and is curved out of the plane (E) and on which the light entry surface (3) is formed.

9. Optical system according to claim 8,
**characterized in that**
the light passage element (7) is plate-like and is arranged so as to extend in parallel with the plane (E).

10. Optical system according to claim 8,
**characterized in that**
at least one of the structural elements (9) has, when viewed in a section parallel to the plane (E), a circular or circle-segment-shaped main extension and a wave shape superposed on the main extension.

11. Optical system according to claim 8,
**characterized in that**
the light exit region (4) extends in the shape of a closed ring in the plane (E), such that as a result an inner edge region (41) of the light exit region (4) is formed, which inner edge region extends in the plane (E), wherein the curved region (6) is formed adjacent to the inner edge region (41).

12. Optical system according to claim 8,
**characterized in that**
the shaping of the light guide element (1) is such that the curved region (6) expands continuously proceeding from the light entry surface (3).

13. Optical system according to any one of the preceding claims,
**characterized in that**
the light guide element (1) and the light passage element (7) have, when viewed normal to the plane (E), substantially the same outer contour, wherein a diameter (D) of the light guide element (1) and a diameter (D') of the light-passage element (7) preferably differ by less than 10%, preferably by less than 5%.

14. Luminaire, in particular a ceiling luminaire, comprising
- a light source having LEDs (13) and
- an optical system according to any one of the preceding claims,
wherein the LEDs (13) are arranged such that they generate a light which enters the light guide element (1) via the light entry surface (3), and wherein an in particular planar light emission surface (14) of the luminaire is preferably formed by the light passage element (7).

15. Luminaire according to claim 14, wherein the optical system has the features specified in claim 8,
**characterized by**
- a sensor or a radio receiver or a radio transmitter (S), which is arranged in a spatial region (R) delimited by the curved region (6) and by the light passage element (7), wherein the design is such that the sensor or the radio receiver or the radio transmitter (S) interacts with the LEDs.

## Revendications

1. Système optique pour une lampe, en particulier pour un projecteur vers le bas, présentant
- un élément conducteur de lumière (1) avec une surface d'entrée de lumière (3) pour l'entrée d'une lumière et avec une zone de sortie de lumière (4) pour la sortie de la lumière et
- un élément de passage de la lumière (7),
dans lequel la conception est telle que la lumière, après la sortie de l'élément conducteur de lumière (1), traverse l'élément de passage de la lumière (7),
dans lequel pour la sortie de la lumière depuis la zone de sortie de lumière (4) de l'élément conducteur de lumière (1) sur l'un des deux composants élément de passage de la lumière (7) ou élément conducteur de lumière (1), une zone de surface structurée (8) est formée, qui forme une surface de contact, à travers laquelle l'élément conducteur de lumière (1) et l'élément de passage de la lumière (7) sont reliés l'un à l'autre,
et dans lequel la zone de surface structurée (8) présente des éléments de structure (9), qui présentent, vus dans une section transversale, en première approche, une forme trapézoïdale,
**caractérisé en ce**
**que** les éléments de structure (9) présentent, vus dans la section transversale, une zone de flanc latéral (10) avec un point d'inflexion (W), de manière à former une première zone partielle de flanc (11), qui présente une courbure concave et une seconde zone partielle de flanc (12), qui présente une courbure convexe.

2. Système optique selon la revendication 1,
**caractérisé en ce**
**que** l'élément conducteur de lumière (1) et l'élément de passage de la lumière (7) sont fermement reliés l'un à l'autre, par exemple collés l'un à l'autre ou fusionnés l'un à l'autre.

3. Système optique selon la revendication 1 ou 2,
**caractérisé en ce**
**que** le composant qui ne présente pas la zone de surface structurée (8), présente une zone de surface plane destinée à venir en contact avec la zone de surface structurée (8).

4. Système optique selon l'une quelconque des revendications précédentes,
**caractérisé en ce**
**que** l'élément conducteur de lumière (1) et l'élément de passage de la lumière (7) sont reliés l'un à l'autre uniquement par le biais de la surface de contact formée par la zone de surface structurée (8).

5. Système optique selon l'une quelconque des revendications précédentes,
**caractérisé en ce**
**que** les éléments de structure (9) présentent une forme trapézoïdale symétrique ou asymétrique.

6. Système optique selon l'une quelconque des revendications précédentes,
**caractérisé en ce**
**que** le tracé de la zone de flanc (10) est décrit par une fonction spline.

7. Système optique selon l'une quelconque des revendications précédentes,
**caractérisé en ce**
**que** les éléments de structure (9) sont conçus de manière à former, par rapport à la surface d'entrée de lumière (3), un agencement concentrique.

8. Système optique selon l'une quelconque des revendications précédentes,
**caractérisé en ce**
**que** la zone de sortie de lumière (4) de l'élément conducteur de lumière (1) s'étend dans un plan (E), dans lequel l'élément conducteur de lumière (1) présente en outre une zone (6) adjacente à la zone de sortie de lumière (4) incurvée à partir du plan (E), au niveau de laquelle la surface d'entrée de lumière (3) est formée.

9. Système optique selon la revendication 8,
**caractérisé en ce**
**que** l'élément de passage de la lumière (7) est conçu en forme de plaque et est disposé s'étendant parallèlement au plan (E).

10. Système optique selon la revendication 8,
**caractérisé en ce**
**qu'**au moins un des éléments de structure (9) présente, vu dans une section parallèle au plan (E), une extension principale en forme de cercle ou de segment de cercle, ainsi qu'une forme d'onde superposée à l'extension principale.

11. Système optique selon la revendication 8,
**caractérisé en ce**
**que** la zone de sortie de lumière (4) est conçue s'étendant dans le plan (E) comme un anneau fermé, de manière à former une zone de bord interne (41) de la zone de sortie de lumière (4) s'étendant dans le plan (E), dans lequel la zone incurvée (6) est formée adjacente à la zone de bord interne (41).

12. Système optique selon la revendication 8,
**caractérisé en ce**
**que** la mise en forme de l'élément conducteur de lumière (1) est telle que la zone incurvée (6) s'élargit en continu à partir de la surface de sortie de lumière (3).

13. Système optique selon l'une quelconque des revendications précédentes,
**caractérisé en ce**
**que** l'élément conducteur de lumière (1) et l'élément de passage de la lumière (7), vus normalement par rapport au plan (E), présentent essentiellement le même contour externe, dans lequel de préférence un diamètre (D) de l'élément conducteur de lumière (1) et un diamètre (D') de l'élément de passage de la lumière (7) sont différents de moins de 10 %, de préférence de moins de 5 %.

14. Lampe, notamment plafonnier, présentant
- une source de lumière comprenant des DEL (13) et
- un système optique selon l'une quelconque des revendications précédentes,
dans lequel les DEL (13) sont disposées de manière à produire une lumière qui entre dans l'élément conducteur de lumière (1) par le biais de la surface d'entrée de lumière (3), dans lequel de préférence une surface d'émission de lumière (14) en particulier plane de la lampe est formée par l'élément de passage de la lumière (7).

15. Lampe selon la revendication 14, dans lequel le système optique présente les caractéristiques mentionnées dans la revendication 8,
**caractérisé par**
- un capteur ou un récepteur radio ou un émetteur radio (S), qui est disposé dans une zone d'espace (R), qui est délimitée par la zone incurvée (6) et l'élément de passage de la lumière (7), dans lequel la conception est telle que le capteur ou le récepteur radio ou l'émetteur radio (S) coopère avec les DEL.
